# EUROPÄISCHE PATENTSCHRIFT

(11) **EP 1 126 960 B1**
(45) Veröffentlichungstag und Bekanntmachung des Hinweises auf die Patenterteilung: **30.07.2003**
(21) Anmeldenummer: 99953595.8
(22) Anmeldetag: 26.08.1999
(51) Int. Cl.: B29C 44/34

(54) **VERFAHREN ZUR HERSTELLUNG VON SCHÄUMEN AUS POLYMEREN ODER POLYMERGEMISCHEN**
METHOD FOR PRODUCING FOAMS MADE OF POLYMERS OR POLYMER MIXTURES
PROCEDE DE PRODUCTION DE MOUSSES A BASE DE POLYMERES OU DE MELANGES POLYMERES

(30) Priorität: 02.11.1998 DE 19850340
(43) Veröffentlichungstag der Anmeldung: 29.08.2001
(73) Patentinhaber: Membrana GmbH, 42289 Wuppertal (DE)
(72) Erfinder: HUANG, Quan, D-20537 Hamburg (DE); PAUL, Dieter, D-14532 Kleinmachnow (DE); SEIBIG, Bernd, D-21502 Geesthacht (DE)
(74) Vertreter: Fett, Günter
(86) Internationale Anmeldenummer: DE9902662
(87) Internationale Veröffentlichungsnummer: WO00026006

(56) Entgegenhaltungen:
- US-A- 5 707 573
- US-A- 5 753 717

## Beschreibung

Die Erfindung betrifft ein Verfahren zur Herstellung von Schäumen, insbesondere mikrozellulären Schäumen, aus Polymeren oder Polymergemischen für die Ausbildung von Formkörpern, wobei in der Verfahrensstrecke die Polymere oder Polymergemische vor Durchleitung durch eine formgebende Einrichtung in einer Extrudereinrichtung geschmolzen werden und mittels Gaseinleitung eine Schaumbildung erfolgt.

Derartige Verfahren, mit denen die verschiedensten Formkörper durch Schmelzextrusion mit Hilfe eines schaumbildenden Gases hergestellt werden, sind für die vielfältigsten Anwendungszwecke seit langem bekannt. Die bisherigen Verfahren zeichnen sich jedoch regelmäßig dadurch aus, daß der Energieaufwand zur Durchführung des Verfahrens sehr groß war und ist. Aus der DE-OS 44 37 800 ist beispielsweise ein Verfahren bekannt, bei dem die Druckbelastung in der dortigen Extrusionseinrichtung über zwei Zonen unterschiedlicher Temperatur konstant ist und somit eine Imprägnierung der Schmelze mit einem schaumbildenden Gas nicht möglich ist.

Aus der DE-OS 44 37 860 ist ein Verfahren zur Herstellung von bahnförmigen mikrozellulären Schaumstoffen aus amorphen thermoplastischen Kunststoffen durch Imprägnieren einer Kunststoffschmelze mit einem flüchtigen Treibmittel bekannt, bei dem in einer ersten Extrusionszone der Thermoplast bei einer Temperatur oberhalb seiner Glastemperatur mit einem Treibmittel imprägniert wird und bei dem in einer zweiten Extrusionszone die treibmittelhaltige Schmelze auf eine Temperatur abgekühlt wird, die oberhalb der Glastemperatur des treibmittelhaltigen Thermoplasten liegt. Dabei wird die treibmittelhaltige Schmelze um mindestens 40°C auf eine Temperatur abgekühlt, die mindestens 30°C oberhalb der Glastemperatur des treibmittelhaltigen Thermoplasten liegt.

Bei anderen Verfahren zur Herstellung von Schäumen aus Polymeren sind sogenannte Keimebildner, beispielsweise in Form von Talkum oder Zeolithe, erforderlich oder zusätzliches Gas.

Aus der US-A-5 753 717 ist ein Verfahren der eingangs genannten Art bekannt, bei dem in einem ersten Teil der Verfahrenstrecke das Schmelzen des Polymers oder Polymergemisches und die Einmischung des gegenühen der Schmelze mit erhöhten Drurck in diese eingelateten Gases erfolgt, und am Ende des ersten Teils der Verfahrenstrecke die gasangereicherte Schmelze durch eine Zahnradpumpe in einen zweiten teil der Verfahrenstrecke geleitet wird, wo sie über einen kühleinrichtung zu einer formgebenden Einrichtung gelangt, aus der sie unter schaumansbildung horansgedrücht wird.

Alles in allem sind die bisherigen Verfahren entweder aufgrund Ihres regelmäßig hohen Energiebedarfs und/oder gegebenenfalls zusätzlicher Mittel zur Initiierung der Schaumbildung nicht in der Lage, zufriedenstellende Ergebnisse auch in bezug auf mit dem Verfahren hergestellte Erzeugnisse zu liefern, so daß es Aufgabe der vorliegenden Erfindung ist, ein Verfahren der eingangs genannten Art zu schaffen, mit dem Formkörper unter geringem Energiebedarf und frei von Zusatzmitteln bzw. Stoffen kontinuierlich, d.h. in einer kontinuierlichen Verfahrensführung, hergestellt werden können, wobei das Verfahren in der Lage sein soll, sowohl offenzellige als auch geschlossene Formkörper zu erzeugen und mit dem auch eine Einstellung der Porengröße mit großer und gewünschter Genauigkeit möglich ist, und wobei das Verfahren gegenüber den bekannten Verfahren einfach und kostengünstig durchführbar sein soll.

Gelöst wird die Aufgabe gemäß der Erfindung durch das Verfahren gemäß Anspruch 1.

Die Druckerhöhung am Ende des ersten Teils der Verfahrensstrecke durch druckerhöhende Mittel, beispielsweise in Form einer Zahnradschmelzepumpe, ermöglicht es, eine Temperaturabsenkung der gasbeaufschlagten Polymer- bzw. Polymergemischschmelze vorzusehen, womit eine Viskositätsänderung in einem weiten Bereich eingestellt werden kann.

Der Vorteil des erfindungsgemäßen Verfahrens besteht im wesentlichen darin, daß die erfindungsgemäß gewählte Segmentierung in minder druck- und höher temperaturbeeinflußten Zonen einerseits und in höher druck- und minder temperaturbeeinflußten Zonen andererseits im zusammenhang mit den hohen Drüchen im zweiten Teil der Verfahrenstrecke eine hohe Löslichkeit des Gases und damit eine optimale Schaumbildung ermöglicht, wobei der Gasanteil in der Schmelze, der in der Mengendosierung auf die gewünschte Eigenschaft des gemäß dem Verfahren hergestellten Formkörpers eingestellt werden kann, durch die dadurch bedingte Verminderung der Viskosität der Schmelze eine Reduzierung des aufzuwendenden Drehmoments und damit eine Reduzierung der Energieaufnahme für die Ausführung des Verfahrens bzw. eine Vorrichtung, mit der das Verfahren ausgeführt werden kann, ermöglicht.

Der Vorteil des erfindungsgemäßen Verfahrens liegt auch darin, daß durch die Aufteilung bzw. Segmentierung der Verfahrensstrecke der Vorgang der Schaumbildung kontrolliert beeinflußt werden kann, indem vor der Druckerhöhung der Schmelze das Aufschmelzen des Polymers bzw. des Polymergemisches und der Gaseintrag darin hinein vonstatten gehen kann und nach der Druckerhöhung im Bereich zwischen dem druckerhöhenden Mittel und der formgebenden Einrichtung gesteuert und kontrolliert die Schaumbildung, insbesondere die mikrozelluläre Schaumbildung, erfolgen kann.

Bei einer vorteilhaften Ausgestaltung des Verfahrens ist die Temperatur des im ersten Teil der Verfahrensstrecke eingeleiteten Gases größer als die Glas- bzw. Schmelztemperatur des Polymers oder des Polymergemisches, so daß sich das eingeleitete Gas zunächst sehr gut in der Polymer- bzw. Polymergemischschmelze verteilen kann. Die Temperatur in dieser Verfahrensstrecke wird dann vorteilhafterweise so gewählt, daß unmittelbar nach der Beimischung des Gases, d.h. dem eigentlichen Beimischungsvorgang des Gases zum Polymer bzw. zur Polymermischung, die weitere Behandlung der gasbeaufschlagten Polymer- bzw. Polymergemischschmelze in bezug auf den genannten Scher-, Knet- und Homogenisierungsvorgang vorteilhafterweise unter beibehaltener Schmelztemperatur des Polymers oder Polymergemisches erfolgt.

Der Druck des in die Polymer- bzw. Polymergemischschmelze eingeleiteten Gases ist vorzugsweise > 150 bar, womit die Löslichkeit des in die Polymer- bzw. Polymergemischschmelze eingeleiteten Gases erhöht wird.

Vorzugsweise wird die Temperatur des gasangereicherten Polymers oder Polymergemisches zwischen dem zweiten Teil der Verfahrensstrecke und der formgebenden Einrichtung gegenüber der Temperatur des gasangereicherten Polymers oder Polymergemisches im ersten Teil der Verfahrensstrecke vermindert

Vorteilhafterweise kann die Temperatur des gasangereicherten Polymers bzw. Polymergemisches zwischen dem zweiten Teil der Verfahrensstrecke und der formgebenden Einrichtung bis zu 150°C unter der Temperatur im ersten Teil der Verfahrensstrecke liegen.

Die Einstellung des Drucks im ersten und/oder zweiten Teil der Verfahrensstrecke wird vorzugsweise in Abhängigkeit der Art des Polymers oder des Polymergemisches und/oder einer gewünschten Porenstruktur (Porengröße, offene Poren, geschlossene Poren) eingestellt, wobei als Polymere alle amorphen thermoplastischen-, teilkristallinen Polymere, Copolymere und Polymerblends wie z.B. Polycarbonat, Polysulfon, Polyethersulfon, Polypropylen, Polyethylen, Polyamid, Polyester, PVDF, u.a., eingesetzt werden können, und wobei die Polymergemische beispielsweise Mischungen aus den vorgenannten Polymeren sein können.

Neben der Einstellung des Drucks ist es ebenfalls vorteilhaft, die Temperatur des zugeführten Gases und die Temperatur des Polymers oder Polymergemisches, d.h. deren Schmelze und/oder deren gasangereicherte Schmelze, im ersten und/oder zweiten Teil der Verfahrensstrecke, ggf. in Abhängigkeit der Art des Polymers oder des Polymergemisches und/oder einer gewünschten Porenstruktur, einzustellen, um eine für das jeweilige Polymer bzw. das Polymergemisch bzw. das daraus herzustellende Erzeugnis in bezug auf die Art der Poren (geschlossen, offen) und die Porengröße optimales Ergebnis zu erhalten, was gleichzeitig der Energieaufnahmereduzierung dienen kann.

Ein mit dem erfindungsgemäßen Verfahren hergestellter Formkörper (Erzeugnis) ist beispielsweise vorzugsweise eine Membran, wie sie für die verschiedensten Trennzwecke von Mediengemischen (flüssig, gasförmig) verwendet wird. Vorzugsweise kann mit dem erfindungsgemäßen Verfahren der Formkörper in Form einer Flachmembran oder auch vorteilhafterweise in Form einer Hohlfadenmembran gebildet werden.

Die Erfindung wird nun unter Bezugnahme auf die nachfolgenden schematischen Zeichnungen anhand eines Ausführungsbeispiels eingehend beschrieben. Darin zeigen:
- Fig. 1: den schematischen Aufbau einer Vorrichtung, mit der das erfindungsgemäße Verfahren ausgeführt werden kann, zur Herstellung von Formkörpern, beispielsweise in Form von Flachmembranen, Hohlfadenmembranen, aber auch zur Herstellung anderer Formkörper,
- Fig. 2: eine Darstellung der geschlossenen Porenstruktur eines mit dem erfindungsgemäßen Verfahren hergestellten Formkörpers und
- Fig. 3: eine Darstellung der offenen Porenstruktur eines mit dem erfindungsgemäßen Verfahren hergestellten Formkörpers.

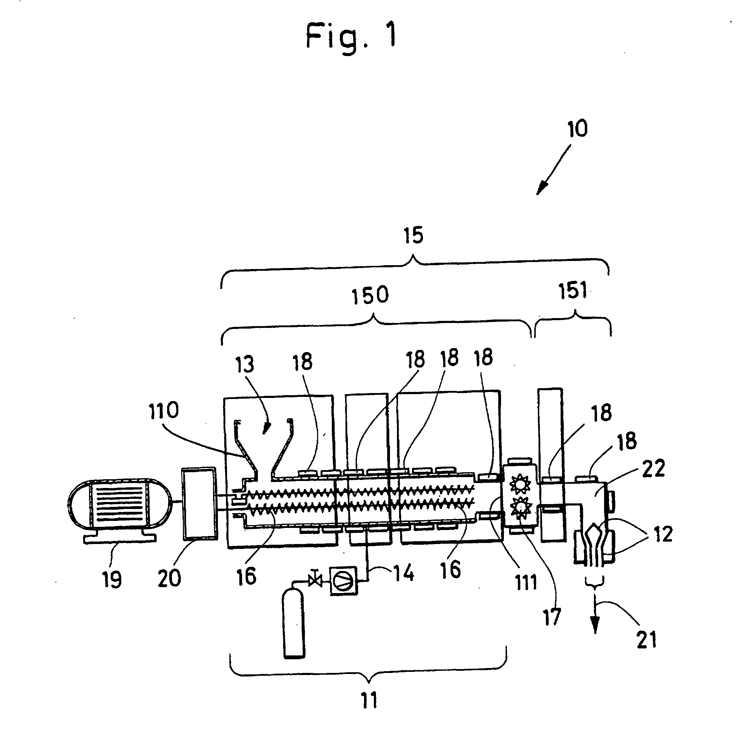

Das erfindungsgemäße Verfahren kann mit einer Vorrichtung 10 ausgeführt werden, wie sie in Fig. 1 dargestellt ist. Aus diesem Grunde wird zunächst die Vorrichtung 10 beschrieben.

Die Vorrichtung 10 umfaßt im wesentlichen eine Extrudereinrichtung 11, die durch einen langgestreckten Extruderkörper gebildet wird, in dem auf an sich bekannte Weise Scher-/Knet-/Homogenisierungseinrichtungen 16 angeordnet sind, beispielsweise nach Art eines an sich bekannten Schneckenförderers, mit dem von einem in der Extrudereinrichtung ausgebildeten trichterförmigen Einlaß 110 der Extrudereinrichtung 11 zugeführte Mittel, im vorliegenden Falle in Form eines Polymers oder Polymergemisches 13, innerhalb der Extrudereinrichtung 11 zu einem dem Einlaß 110 entgegengesetzt angeordneten Auslaß 111 gefördert werden. Dazu weist die Vorrichtung 10 einen Antriebsmotor 19 auf und gegebenenfalls ein Getriebe 20, über das die Scher-/Kneteinrichtung bzw. Scher-/Kneteinrichtungen 16 drehbar mit dem Antriebsmotor 19 gekoppelt sind. Das Getriebe 20 kann beispielsweise ein Planetengetriebe sein.

Um den langgestreckten Körper der Extrudereinrichtung 11 herum sind Temperierungseinrichtungen 18 angeordnet, die Kühleinrichtungen und Erwärmungseinrichtungen sein können.

Im mittleren Teil der Extrudereinrichtung 11 ist eine Zufuhröffnung für Gas 14 in die Extrudereinrichtung 11 hinein vorgesehen.

Unmittelbar an den Auslaß 111 der Extrudereinrichtung 11 anschließend ist eine Pumpe 17, hier in Form einer Zahnradschmelzepumpe, angeordnet. Die Extrudereinrichtung 11 bildet zusammen mit der Pumpe 17 einen ersten Teil 150 der Verfahrensstrecke 15 des erfindungsgemäßen Verfahrens.

Der Pumpe 17 nachfolgend wird ein zweiter Teil 151 der Verfahrensstrecke 15 gebildet, und zwar durch einen Kopf 22, an dessen austrittsseitigem Ende eine formgebende Einrichtung 12 angeordnet ist, mit der beispielsweise Formkörper in Form von Flachmembranen, Hohlfadenmembranen, aber auch anderen gewünschten Formkörpern, hergestellt werden. Der Austritt des Formkörpers/Erzeugnisses 21 aus der Vorrichtung 10 am Ende der Ausführung des erfindungsgemäßen Verfahrens ist durch Pfeil 21 symbolisiert. Auch der Kopf 22 kann Temperierungseinrichtungen 18 umfassen, mit denen das sich im Innenraum des Kopfes 22 befindliche gasangereicherte Polymer bzw. Polymergemisch 13 geeignet temperiert werden kann.

Das Verfahren gemäß der Erfindung läuft nun unter Verwendung der vorbeschriebenen Vorrichtung 10 wie folgt ab:

Ein Polymer bzw. Polymergemisch 13, das beispielsweise in Form eines Granulats vorliegt, wird über den trichterförmigen Einlaß 110 in die zum ersten Teil 150 der Verfahrensstrecke 15 gehörende Extrudereinrichtung 11 eingegeben, wobei in diesem Teil 150 zunächst über die Temperierungsmittel 18 das Polymer bzw. die Polymermischung 13 geschmolzen wird. Die Schmelztemperatur beträgt beispielsweise bei einem Polymer wie Polycarbonat 290°C. Durch den Antriebsmotor 19 angetrieben, wird mittels des beispielsweise in Form der Scher-/Knet-/Homogenisierungseinrichtung 16 ausgebildeten Schneckenförderers das geschmolzene Polymer bzw. Polymergemisch in den Bereich der Extrudereinrichtung 11 gefördert, in dem Gas 14 unter hohem Druck, beispielsweise 150 bar, eingeführt wird.

Durch die rotierende Scher-/Knet-/Homogenisierungseinrichtung 16 wird verhindert, daß sich das Gas oberhalb der Schmelze des Polymers bzw. Polymergemisches 13 absetzt. Vielmehr wird durch die rotierende Scher-/Knet-/Homogenisierungseinrichtung 16 das Gas 14, das beispielsweise CO₂ sein kann, optimal in die Schmelze eingemischt, so daß es dort zu einer nahezu vollständigen Lösung des Gases in der Schmelze kommt. Durch die am zum Gaszuführungsort an der Extrudereinrichtung 11 nachfolgend angeordneten weiteren Temperierungsmittel 18 wird die Temperatur der gasangereicherten Schmelze in der Extrudereinrichtung 11 gegenüber der ursprünglichen Schmelztemperatur abgesenkt und bis zum Auslaß 111 im wesentlichen konstant gehalten, wobei die Absenkung der Temperatur beispielsweise gegenüber der Schmelztemperatur von 290°C auf 225°C bei einem durch Polycarbonat gebildeten Polymer erfolgt. Im letzten Abschnitt des ersten Teils 150 der Verfahrensstrecke findet mittels der Pumpe 17 (Zahnradschmelzepumpe), die für den nachfolgenden zweiten Teil 151 der Verfahrensstrecke 15 eine Druckbarriere bildet, eine beträchtliche Druckerhöhung der gasangereicherten Polymer- bzw. Polymergemischschmelze statt, d.h. im hier rohrförmig ausgebildeten Kopf 22. Im Kopf 22 findet aufgrund der Druckerhöhung eine nochmalige Steigerung der Lösung des Gases in der Polymer- bzw. in der Polymergemischschmelze statt. Das hat zur Folge, daß über die auch im zweiten Teil 151 der Verfahrensstrecke 15, d.h. im rohrförmigen Kopf 22, angeordneten Temperierungseinrichtungen 18 eine Verminderung der Temperatur der gasangereicherten Schmelze aus Polymer bzw. Polymergemisch 13 vorgenommen werden kann.

Bedingt durch die Tätigkeit der Pumpe 17 wird die sich im Kopf 22 auf bis zu 1500 bar und mehr druckbeaufschlagte gasangereicherte Polymer- bzw. Polymergemischschmelze 13 aus der formgebenden Einrichtung 12 herausgedrückt, wobei wenigstens unmittelbar nach Austritt der gasangereicherten Polymer- bzw. Polymergemischschmelze 13 aus der formgebenden Einrichtung 12 der Polymer- bzw. Polymergemischschaum, durch geeignete Formgebung durch die formgebende Einrichtung 12, beispielsweise als Flachmembran oder Hohlfadenmembran, austritt.

Alle Drücke und alle Temperaturen des Polymers bzw. des Polymergemisches 13 einschließlich des Gases 14 sind durch die vorerwähnten vorrichtungsseitigen Druckmittel wie Pumpe 17, die Scher-/Knet-/Homogenisierungseinrichtung 16 sowie die Temperierungsmittel 18 (Kühlung, Erwärmung) geeignet an das verwendete Polymer bzw. das verwendete Polymergemisch 13 anpaßbar und optimierbar.

### Beispiel:

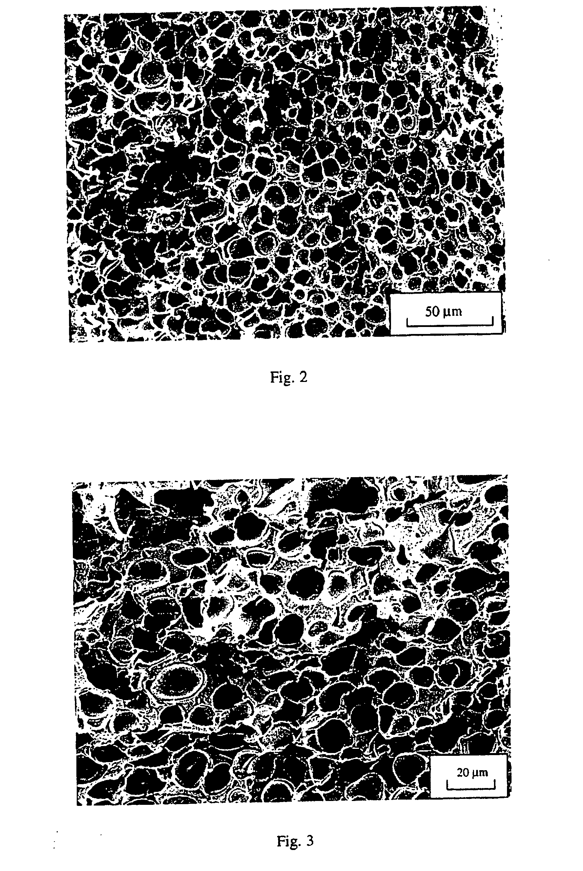

In einem gleichläufigen Doppelschneckenextruder mit einer Geometrie von 25 mm Innendurchmesser und einem L/D-Verhältnis von 32 D wurde ein Polycarbonatgranulat bei 290°C aufgeschmolzen und unter einem Druck von 140 bar mit 8 Gew.-% C0₂ beaufschlagt (Fig. 1). Das verwendete Polycarbonat hat einen Schmelzvolumenindex MVI (300°C/1,2 kg) von 9,5 ml/10 min. In den nach der Gasinjektionsstelle folgenden 5 Extrudersegmenten wurde die Schmelztemperatur entsprechend der gelösten Gasmenge im Polymer auf 225°C gesenkt. In der angeschlossenen Zahnradschmelzepumpe erfolgt eine Druckerhöhung auf ca. 650 bar. Unter dieser Druckbedingung wird die Löslichkeit des Gases weiter gesteigert, so daß die Schmelzetemperatur in diesem Segment auf 170°C herabgesetzt werden kann. Am Austritt einer ringförmigen Hohlfadendüse entsteht ein offenzelliger Polycarbonatschaum mit einer mittleren Zellgröße von 10 µm und einer Zelldichte von 2x10⁹ Zellen/cm³ (Fig. 2). Die Permeabilität von N₂ beträgt 1,2 m³/m²∗h∗bar, von O₂ beträgt 1,1 m³/m²∗h∗bar und von He 2,2 m³/m²∗h∗bar.

Wenn unter den vorgenannten Versuchsbedingungen bei gleicher Versuchsanordnung der Schmelzedruck 320 bar statt wie genannt 650 bar in diesem Segment beträgt, dann entsteht am Austritt einer ringförmigen Hohlfadendüse ein Polycarbonatschaum mit überwiegend geschlossenporiger Struktur. Die mittlere Zellgröße in diesem Hohlfaden beträgt dann 13 µm und die Zelldichte 7x10⁸ Zellen/cm³ (Fig. 3).

### Bezugszeichenliste

- 10: Vorrichtung
- 11: Extrudereinrichtung
- 110: Einlaß
- 111: Auslaß
- 12: formgebende Einrichtung
- 13: Polymer/Polymergemisch
- 14: Gas
- 15: Verfahrensstrecke
- 150: erster Teil
- 151: zweiter Teil
- 16: Scher-/Knet-/Homogenisierungseinrichtung
- 17: Pumpe
- 18: Temperierungseinrichtung (Kühlung, Erwärmung)
- 19: Antriebsmotor
- 20: Getriebe
- 21: Formkörper/Erzeugnis
- 22: Kopf

## Patentansprüche

1. Verfahren zur Herstellung von Schäumen, insbesondere mikrozellulären Schäumen, aus Polymeren oder Polymergemischen für die Ausbildung von Formkörpern, wobei in der Verfahrensstrecke die Polymere oder Polymergemische vor Durchleitung durch eine formgebende Einrichtung (12) in einer Extrudereinrichtung geschmolzen werden und mittels Gaseinleitung eine Schaumbildung erfolgt, wobei die Verfahrensstrecke (15) in wenigstens einen ersten Teil (150) und einen zweiten Teil (151) unterteilt ist, wobei im ersten Teil (150) das Schmelzen des Polymers oder Polymergemisches (13) und die Einmischung des gegenüber der Schmelze mit erhöhten Druck in diese eingeleiteten Gases (14) unter Einwirkung wenigstens eines Scher- und/oder Knetmittels (16), und am Ende des ersten Teils der Verfahrensstrecke durch druckerhöhende Mittel (17) eine Druckerhöhung erfolgt, so dass der Druck des gasangereicherten Polymers oder Polymergemisches zwischen dem zweiten Teil der Verfahrensstrecke und der formgebenden Einrichtung gegenüber dem Druck des gasangereicherten Polymers oder Polymergemisches im ersten Teil der Verfahrensstrecke auf einen Druck im Bereich zwischen 500 und 1500 bar erhöht ist, und wobei die druckbeaufschlagte gasangereicherte Polymer- bzw. Polymergemischschmelze (13) aus der formgebenden Einrichtung (12) herausgedrückt wird, und wenigstens unmittelbar nach Austritt aus der formgebenden Einrichtung (12) die Schaumbildung erfolgt.

2. Verfahren nach Anspruch 1, **dadurch gekennzeichnet, daß** die Temperatur des in den ersten Teil (150) der Verfahrensstrecke (15) eingeleiteten Gases (14) größer als die Glas- bzw. Schmelztemperatur des Polymers oder Polymergemisches (13) ist.

3. Verfahren nach einem oder beiden der Ansprüche 1 oder 2, **dadurch gekennzeichnet, daß** der Beimischungsvorgang des Gases (14) zum Polymer oder zum Polymergemisch (13) unter beibehaltener Schmelztemperatur des Polymers oder Polymergemisches (13) erfolgt.

4. Verfahren nach einem oder mehreren der Ansprüche 1 bis 3, **dadurch gekennzeichnet, daß** der Druck des eingeleiteten Gases (14) > 150 bar ist.

5. Verfahren nach einem oder mehreren der Ansprüche 1 bis 4, **dadurch gekennzeichnet, daß** die Temperatur des gasangereicherten Polymers oder Polymergemisches (13) zwischen dem zweiten Teil (151) der Verfahrensstrecke (15) und der formgebenden Einrichtung (12) gegenüber der Temperatur des gasangereicherten Polymers oder Polymergemisches (13) im ersten Teil (150) der Verfahrensstrecke (15) vermindert wird.

6. Verfahren nach einem oder mehreren der Ansprüche 1 bis 5, **dadurch gekennzeichnet, daß** der Druck des gasangereicherten Polymers oder Polymergemisches (13) im ersten und /oder im zweiten Teil (150, 151) der Verfahrensstrecke (15), ggf. in Abhängigkeit der Art des Polymers oder Polymergemisches (15) und /oder einer gewünschten Porenstruktur, eingestellt wird.

7. Verfahren nach einem oder mehreren der Ansprüche 1 bis 6, **dadurch gekennzeichnet, daß** die Temperatur des zugeführten Gases und die Temperatur des gasangereicherten Polymers oder Polymergemisches (13) im ersten Teil und/oder im zweiten Teil der Verfahrensstrecke (150, 151) ggf. in Abhängigkeit der Art des Polymers oder Polymergemisches (13) und/oder einer gewünschten Porenstruktur, eingestellt wird.

8. Verfahren nach einem oder mehreren der Ansprüche 1 bis 7,**dadurch gekennzeichnet, daß** als Formkörper eine Membran hergestellt wird.

9. Verfahren nach Anspruch 8, **dadurch gekennzeichnet, daß** die Membran eine mikrozelluläre Struktur mit einer mittleren Zellgröße von 0,5 bis 15 µm und eine Wandstärke von 0,025 bis 100 mm aufweist.

10. Verfahren nach einem oder beiden der Ansprüche 8 oder 9 **dadurch gekennzeichnet, daß** die Membran eine Flachmembran ist.

11. Verfahren nach einem oder beiden der Ansprüche 8 oder 9 **dadurch gekennzeichnet, daß** die Membran eine Hohlfadenmembran ist.

## Claims

1. A method for producing foams, in particular micro-cellular foams made from polymers or polymer blends for forming moulded bodies, wherein in the process line the polymers and polymer blends are melted in an extrusion device prior to passing through a moulding device (12) and foam is produced by means of introducing gas, wherein said process line (15) comprises at least a first part (150) and a second part (151), in said first part (150) the polymer or polymer blend (13) is melted and gas is introduced thereto at a higher pressure than used for the melt and mixed therewith by employing at least one shearing and/or kneading means (16), and at the end of the first part of the process line higher pressure occurs due to pressure increasing means (17) so that the pressure of the gas-enriched polymer or polymer blend between the second part of the process line and the moulding device is increased over the pressure of the gas-enriched polymer or polymer blend in the first part of the process line to a pressure in the range of 500 to 1,500 bar, and said polymer or polymer blend melt (13) applied with high pressure and enriched with gas is pressed out of said moulding device (12), and at least immediately after exiting said moulding device (12) foam is produced.

2. A method according to claim 1, wherein the temperature of the gas (14) introduced to the first part (150) of the process line (15) is higher than the glass transition or melting temperature of the polymer or polymer blend (13).

3. A method according to one or both of claims 1 and 2, wherein the process of enriching the polymer or polymer blend (13) with the gas (14) is effected, whilst the melting temperature of the polymer or polymer blend (13) is maintained.

4. A method according to one or more of claims 1 to 3, wherein the pressure of the introduced gas (14) is > 150 bar.

5. A method according to one or more of claims 1 to 4, wherein the temperature of the gas-enriched polymer or polymer blend (13) between the second part (151) of the process line (15) and the moulding device (12) is reduced, with respect to the temperature of the gas-enriched polymer or polymer blend (13) in the first part (150) of the process line (15).

6. A method according to one or more of claims 1 to 5, wherein the pressure of the gas-enriched polymer or polymer blend (13) in the first and/or second part (150, 151) of the process line (15) is set, if necessary in relation to the nature of the polymer or polymer blend (13) and/or the desired porous cell structure.

7. A method according to one or more of claims 1 to 6, wherein the temperature of the introduced gas and the temperature of the gas-enriched polymer or polymer blend (13) in the first part and/or second part of the process line (150, 151) is set, if necessary in relation to the nature of the polymer or polymer blend (13) and/or the desired porous cell structure.

8. A method according to one or more of claims 1 to 7, wherein the moulded body so produced is a membrane.

9. A method according to claim 8, wherein the membrane shows a micro-cellular structure with an average cell size of 0.5 to 15 µm and a wall thickness of 0.025 to 100 mm.

10. A method according to one or both of claims 8 or 9, wherein the membrane is a flat membrane.

11. A method according to either or both of claims 8 or 9, wherein the membrane is a hollow fibre membrane.

## Revendications

1. Procédé de production de mousses, en particulier de mousses micro-alvéolaires, à partir de polymères ou de mélanges de polymères, destinées à la fabrication de corps moulés, dans la ligne duquel procédé les polymères ou les mélanges de polymères, avant de passer par un dispositif de moulage (12), sont fondus dans un dispositif d'extrusion et un moussage a lieu par introduction de gaz, la ligne de procédé (15) étant divisée au moins en une première partie (150) et une deuxième partie (151), dans lequel procédé ont lieu, dans la première partie (150), la fusion du polymère ou du mélange de polymères (13) et l'incorporation du gaz (14), introduit dans la masse fondue avec une pression élevée par rapport à celle de la masse fondue, sous l'action d'au moins un moyen de cisaillement et/ou de malaxage (16), et à la fin de la première partie de la ligne de procédé, une augmentation de la pression, réalisée par des moyens d'augmentation de pression (17) et telle que la pression du polymère ou du mélange de polymères enrichi en gaz, entre la deuxième partie de la ligne de procédé et le dispositif de moulage, est augmentée, par rapport à la pression du polymère ou du mélange de polymères enrichi en gaz dans la première partie de la ligne de procédé, jusqu'à une pression valant de 500 à 1500 bars, et dans lequel procédé la masse fondue (13) de polymère ou de mélange de polymères, enrichie en gaz et mise sous haute pression, est expulsée du dispositif de moulage (12) et le moussage se produit au moins immédiatement après la sortie du dispositif de moulage (12).

2. Procédé conforme à la revendication 1, **caractérisé en ce que** le gaz (14) introduit dans la première partie (150) de la ligne de procédé (15) se trouve à une température supérieure à la température de transition vitreuse ou à la température de fusion du polymère ou du mélange de polymères (13).

3. Procédé conforme à l'une des revendications 1 et 2 ou aux deux, **caractérisé en ce que**, pendant l'opération d'incorporation du gaz (14) dans le polymère ou le mélange de polymères (13), on maintient la température de la masse fondue (13) de polymère ou de mélange de polymères.

4. Procédé conforme à l'une ou plusieurs des revendications 1 à 3, **caractérisé en ce que** la pression du gaz introduit (14) est supérieure à 150 bars.

5. Procédé conforme à l'une ou plusieurs des revendications 1 à 4, **caractérisé en ce qu'**on fait baisser la température du polymère ou du mélange de polymères (13) enrichi en gaz, entre la deuxième partie (151) de la ligne de procédé (15) et le dispositif de moulage (12), par rapport à la valeur qu'a la température du polymère ou du mélange de polymères (13) enrichi en gaz dans la première partie (150) de la ligne de procédé (15).

6. Procédé conforme à l'une ou plusieurs des revendications 1 à 5, **caractérisé en ce que** l'on ajuste la pression du polymère ou du mélange de polymères (13) enrichi en gaz, dans la première et/ou la deuxième partie (150, 151) de la ligne de procédé (15), le cas échéant en fonction du type du polymère ou du mélange de polymères (13) et/ou de la structure de pores voulue.

7. Procédé conforme à l'une ou plusieurs des revendications 1 à 6, **caractérisé en ce que** l'on ajuste la température du gaz apporté et la température du polymère ou du mélange de polymères (13) enrichi en gaz, dans la première et/ou la deuxième partie (150, 151) de la ligne de procédé, le cas échéant en fonction du type du polymère ou du mélange de polymères (13) et/ou de la structure de pores voulue.

8. Procédé conforme à l'une ou plusieurs des revendications 1 à 7, **caractérisé en ce qu'**on fabrique, en tant que corps moulé, une membrane.

9. Procédé conforme à la revendication 8, **caractérisé en ce que** la membrane présente une structure micro-alvéolaire où la taille moyenne des alvéoles vaut de 0,5 à 15 µm, ainsi qu'une épaisseur de paroi de 0,025 à 100 mm.

10. Procédé conforme à l'une des revendications 8 et 9 ou aux deux, **caractérisé en ce que** la membrane est une membrane plane.

11. Procédé conforme à l'une des revendications 8 et 9 ou aux deux, **caractérisé en ce que** la membrane est une membrane en fibres creuses.
